# EUROPÄISCHE PATENTSCHRIFT

(11) **EP 0 515 628 B1**
(45) Veröffentlichungstag und Bekanntmachung des Hinweises auf die Patenterteilung: **25.09.1996**
(21) Anmeldenummer: 92901093.2
(22) Anmeldetag: 19.12.1991
(51) Int. Cl.: C02F 1/76

(54) **VORRICHTUNG UND VERFAHREN ZUR ENTKEIMUNG VON WASSER**
DEVICE AND METHOD FOR STERILIZING WATER
DISPOSITIF ET PROCEDE POUR LA STERILISATION D'EAU

(30) Priorität: 19.12.1990 DE 4040694
(43) Veröffentlichungstag der Anmeldung: 02.12.1992
(73) Patentinhaber: SCHÖBERL, Meinolf, D-83209 Prien (DE)
(72) Erfinder: SCHÖBERL, Meinolf, D-83209 Prien (DE)
(74) Vertreter: Schlimme, Wolfram, Dr.-Ing.
(86) Internationale Anmeldenummer: EP9102459
(87) Internationale Veröffentlichungsnummer: WO9211209

(56) Entgegenhaltungen:
- EP-A- 0 322 478
- WO-A-85/01965
- FR-A- 2 644 155
- GB-A- 2 176 497
- US-A- 3 305 472
- US-A- 4 202 738

## Beschreibung

Die Erfindung betrifft eine Vorrichtung zur Entkeimung von Wasser mittels anodischer Oxidation mit einem zumindest je eine Anode und eine Kathode aufweisenden, von Wasser durchströmbaren Reaktor sowie einer mit der Anode und der Kathode verbundenen elektrischen Stromversorgungseinrichtung, wobei zwischen einander zugewandten Flächen von Anode und Kathode ein Spalt mit gleichbleibender Spaltbreite vorgesehen ist, wobei die Anode aus einem Ventilmetallkern mit einer homogenen elektrokatalytisch aktiven Beschichtung besteht, die sich überwiegend aus einer Verbindung von Titan und zumindest einem Platinmetall zusammensetzt.

Eine derartige Vorrichtung ist aus der US-A-4,202,738 bekannt. In diesem bekannten Reaktor sind eine Mehrzahl von bipolaren Elektrodenplatten angeordnet, die von aufgesalzenem Wasser durchströmt werden.

Eine künstliche Aufsalzung von Süßwasser mittels Halogensalzen bzw. ein Mindestgehalt an Halogensalzen im Wasser ist bei dieser bekannten Vorrichtung erforderlich, um eine zur Entkeimung des Wassers ausreichende Menge Chlor elektrolytisch zu erzeugen.

Es ist daher die Aufgabe der vorliegenden Erfindung, eine gattungsgemäße Vorrichtung zur Entkeimung von Wasser mittels anodischer Oxidation sowie ein Verfahren zur Entkeimung von Wasser anzugeben, die es gestatten, eine biozide Behandlung von Wasser auch bei niedrigen Chloridkontentrationen des Wassers durchzuführen.

Der die Vorrichtung betreffende Teil dieser Aufgabe wird gemäß dem kennzeichnenden Teil des Patentanspruchs 1 dadurch gelöst, daß mehrere Anoden und mehrere Kathoden in einem Elektrodenmodul für einen Reaktor angeordnet sind und daß ein Reaktor eine Mehrzahl von Elektrodenmodulen aufweist, daß die Elektrodenmodule untereinander als elektrische Serienschaltung verbunden sind und daß sowohl die Anoden als auch die Kathoden eines jeden Elektrodenmoduls jeweils untereinander elektrisch leitend in Paralellschaltung miteinander verbunden sind.

Der modulare Aufbau der Vorrichtung erhöht auch die Wirtschaftlichkeit der Vorrichtung bei der Fertigung und bei der Wartung. Außerdem wird dadurch ermöglicht, daß eine Mehrzahl von Elektrodenmodulen untereinander als elektrische Serienschaltung verbunden sind. Auf diese Weise wird erreicht, daß unter Beibehaltung der jeweils zwischen Anode und Kathode herrschenden vorgegebenen Spannung eine erhebliche Vergrößerung des aktiven Reaktorvolumens und der Anodenfläche möglich ist, ohne den insgesamt durch den Reaktor fließenden elektrischen Strom zu erhöhen, da aufgrund der Serienschaltung der Module die notwendige elektrische Leistungserhöhung über eine Erhöhung der am Reaktor insgesamt anliegenden Spannung erzielt wird.

Der das Verfahren betreffende Teil der Aufgabe wird durch das im Anspruch 13 angegebene Verfahren gelöst.

Eine bevorzugte Weiterbildung der Vorrichtung kennzeichnet einen besonders geeigneten Anoden-Aufbau, wobei der aus Ventilmetall, wie bespielsweise Titan, Niob oder Tantal, bestehende Kern der Anode aufgrund der Eigenschaft eines Ventilmetalls, im Elektrolyten eine schützende, stabile Oxidschicht zu bilden, dafür sorgt, daß in Bereichen, in denen die Beschichtung des Anodenkerns Lücken aufweist, keine Korrosion des Anodenkerns auftritt. Die Wirksamkeit einer derartigen Anode wird weiter dadurch verbessert, daß eine Mehrzahl von Schichten-Paaren vorgesehen ist, die sich einander abwechselnd aufgetragen sind. Ein bevorzugtes Ventilmetall für den Anodenkern ist Titan.

Durch die besonders glatte Oberfläche der Anode nach Anspruch 5 wird - im Gegensatz zur üblichen Elektrolyse - die Langzeitkonstanz der Anodenaktivität erhöht, da die gesamte aktive Oberfläche der Anode aufgrund der geringen Rauhtiefe durch Adsorbatschichten nicht blockiert wird.

Bevorzugte Ausbildungen zur Gewährleistung einer gewünschten laminaren Strömung sind nach Anspruch 6 die parallele Anordnung von Anode und Kathode, wobei Anode und Kathode bevorzugt von planparallelen Platten gebildet sind, sowie nach Anspruch 8 die konzentrische Anordnung von rohrförmigen Anoden und rohrförmigen Kathoden.

Die Kontaktierung der Elektroden gemäß den Ansprüchen 9, 10 und 11 verhindert aufgrund der hohen Flächenpressung zwischen den Grenzflächen von Elektroden und Abstandselementen weitgehend eine Widerstandspolarisation, so daß die elektrochemische Korrosion an den Grenzflächen nahezu vermieden wird. Diese Kontaktierung ist unter Wasser besonders sicher und wirksam und kann jederzeit wieder gelöst werden.

Sind gemäß Anspruch 12 in Strömungsrichtung hinter dem Reaktor eine Meßeinrichtung zur Bestimmung der Chloräquivalente der im Wasser befindlichen Oxidantien sowie eine dieses Meßsignal weiterverarbeitende Regeleinheit zur Regelung der Stromversorgungseinrichtung vorgesehen, so kann ein besonders wirksamer automatischer Betrieb der Vorrichtung erfolgen. Insbesondere ist eine derartige Vorrichtung geeignet, das Verfahren zur Entkeimung von Wasser mittels anodischer Oxidation nach Anspruch 15 durchzuführen, wobei durch die Bestimmung der Konzentration der Chloräquivalente der Oxidantien und den Vergleich dieser gemessenen Konzentration mit einem Sollwert, nämlich der Konzentration, die zur Abtötung der Keime notwendig ist, die elektrische Gesamtstromdichte verändert werden kann.

Aufgrund der laminaren Strömung zwischen den einander zugewandten Flächen von Anode und Kathode wird gewährleistet, daß auch bei nur geringer Konzentration von gelösten Chlorid; Ionen im Wasser diese mittels elektrostatischer Migration im homogenen Potentialfeld gleichmäßig zur Anodengrenzschicht transportiert werden, ohne dabei von turbulenten Strömungsvektoren in ihrer Migrationsbewegung gehindert zu werden. Gleichzeitig wird durch die erfindungsgemäße Wahl des Anodenwerkstoffs gewährleistet, daß die unerwünschte Erzeugung von molekularem Sauerstoff - und damit die unerwünschte Gasblasenbildung auf den Elektrodenoberflächen gegenüber der Erzeugung von Chlor, Chlorsauerstoffsäuren, deren Salzen und anderen Oxidantien, die als Chloräquivalente bestimmt werden können, (wie beispielsweise alle mit DPD (Diethyl-p-Phenylendiamin) nachweisbaren Oxidantien, überwiegend HOCl und OCl-) herabgesetzt ist.

Die Erfindung wird nachfolgend anhand eines Beispiels unter Bezugnahme auf die Zeichnung näher erläutert; in dieser zeigt:
- **Fig. 1.**: eine Seitenansicht eines Reaktors der Vorrichtung nach der Erfindung,
- **Fig. 2.**: einen Schnitt nach Linie II - II durch den Reaktor aus Fig. 1,
- **Fig. 3.**: einen Kontaktbolzen,
- **Fig. 4.**: einen Schnitt durch ein Elektrodenmodul entsprechend der Schnittrichtung IV - IV in Fig. 2,
- **Fig. 5.**: einen Ausschnitt eines Elektrodenmoduls nach V in Fig. 4,
- **Fig. 6.**: eine vergrößerte Darstellung des Anodenaufbaus,
- **Fig. 7.**: das Potentialverhalten eines bevorzugten Anodenmaterials und
- **Fig. 8.**: den schematischen Aufbau einer Vorrichtung der Erfindung mit vorgesehener Regelung.

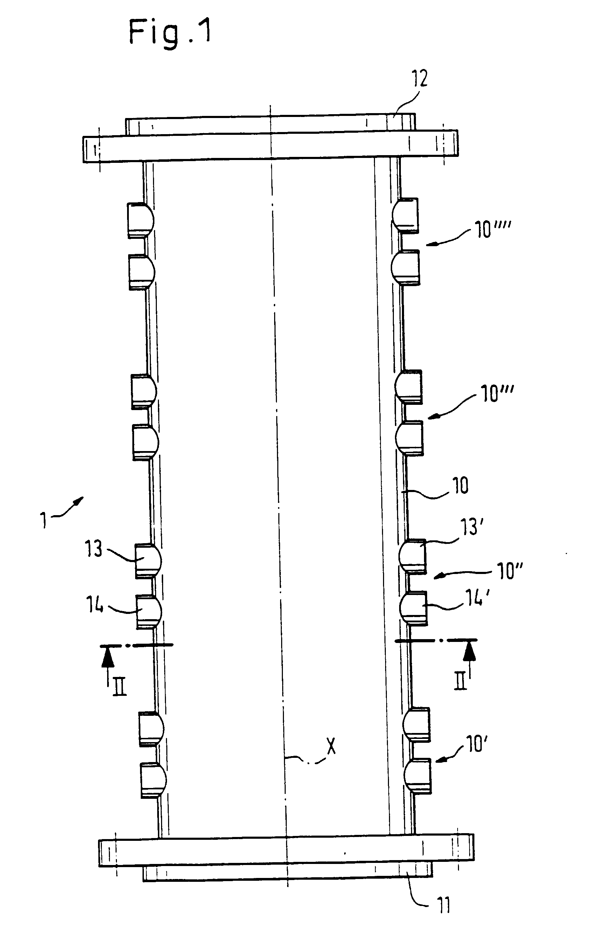

In Fig. 1 ist ein Reaktor 1 einer Vorrichtung zur Entkeimung von Wasser dargestellt, der ein rohrförmiges Gehäuse 10 aufweist, an dessen axialen Enden ein Einlaßflansch 11 sowie ein Auslaßflansch 12 angeordnet sind.

Das Gehäuse 10 weist über seiner Axialerstreckung vier aufeinanderfolgende im wesentlichen identische Gehäuseabschnitte 10', 10", 10"', 10"" auf. Jeder dieser Gehäuseabschnitte ist an diametral gegenübergelegenen Orten mit einer ersten 13 sowie einer zweiten 13' Kontaktdurchführung für den Anodenanschluß und einer ersten 14 sowie einer zweiten (14') Kontaktdurchführung für den Kathodenanschluß versehen. Die Kontaktdurchführungen 13, 13', 14, 14' sind als sich radial erstreckende Rohrabschnitte ausgebildet, die die Wandung des Gehäuses 10 durchdringen und an ihrem Außenumfang mit der Wandung des Gehäuses 10 abdichtend und druckfest verbunden sind. Die ersten Kontaktdurchführungen 13, 14 bzw. die zweiten Kontaktdurchführungen 13', 14' sind jeweils in Richtung der Achse X des rohrförmigen Gehäuses 10 nebeneinander angeordnet.

Da jeder Gehäuseabschnitt mit Kontaktdurchführungen 13, 13', 14, 14' versehen ist, besitzt ein Gehäuse 10 eine der Anzahl der Gehäuseabschnitte entsprechende Mehrzahl von einander diametral gegenüberliegenden ersten und zweiten Kontaktdurchführungs-Paaren, wie dies in Fig. 1 zu erkennen ist.

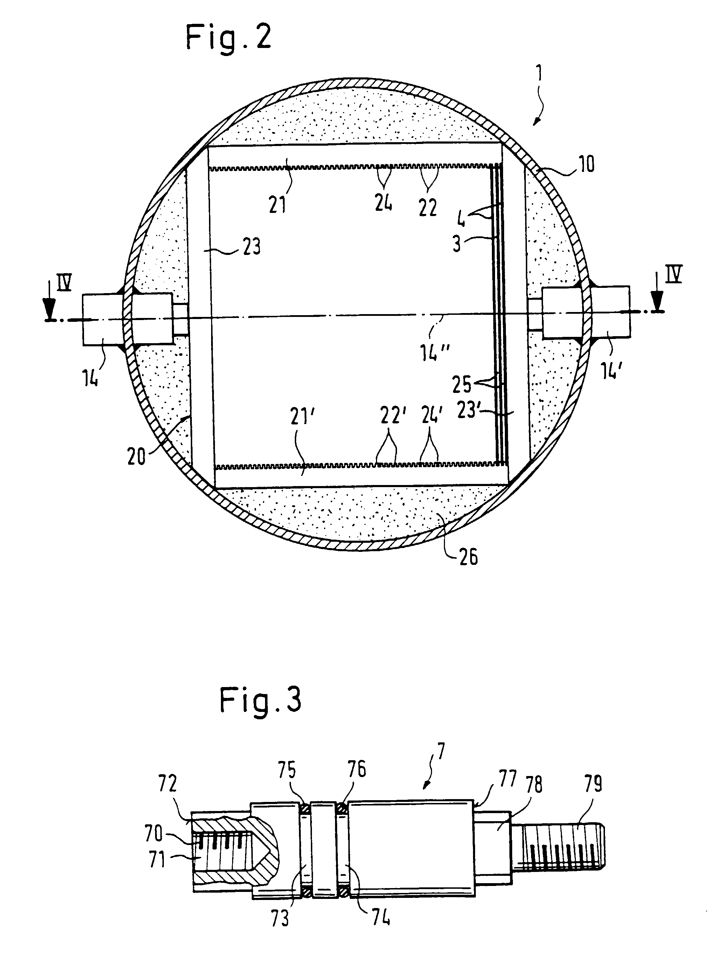

Fig. 2 stellt einen Querschnitt durch einen Reaktor 1 entlang der Linie II - II in Fig. 1 dar. Deutlich ist der rohrförmige Querschnitt des Gehäuses 10 mit den beiden radial gegenübergelegenen ersten und zweiten Kontaktdurchführungen 14, 14' für den Kathodenanschluß zu erkennen. In das rohrförmige Gehäuse 10 ist ein quadratischer Rahmen 20 eingesetzt, der zur Aufnahme der Elektroden 3, 4 dient und vorzusweise aus lebensmittelechtem PVC besteht. Die Ecken des Rahmens 20 sind an den Außenseiten abgeschrägt oder abgerundet und der Rahmen 20 ist in das Gehäuse 10 paßgenau derart eingesetzt, daß die abgeschrägten oder abgerundeten Ecken an der Innenseite des rohrförmigen Gehäuses 10 anliegen. Die Oberkante und die Unterkante des Rahmens verlaufen dabei parallel zu der den Kontaktdurchführungen 14, 14' gemeinsamen Achse 14''.

Der Rahmen 20 besteht aus zwei seitlichen Rahmenwänden 23, 23', die jeweils der ersten bzw. der zweiten Kontaktdurchführung für den Anodenanschluß und den Kathodenanschluß 13, 14; 13', 14' benachbart gelegen sind. Die obere und die untere Wand des Rahmens 20 werden von einer oberen Kammplatte 21 und einer unteren Kammplatte 21' gebildet. Die Kammplatten 21, 21' sind auf ihrer der Innenseite des Rahmens zugewandten Fläche mit nebeneinander angeordneten und parallel zur Achse X des Gehäuses 10 verlaufenden Nuten 24 versehen. Zwischen den Nuten 24 ist jeweils ein in den Rahmeninnenraum ragender Steg 22 vorgesehen.

Die Nuten 24 dienen zur Führung von in den Rahmen 20 eingesetzten plattenförmigen Elektroden 3, 4, die sich parallel zu dem Seitenwänden 23, 23' des Rahmens 20 erstrecken und deren Plattengröße bevorzugt etwa 200 mm x 100 mm beträgt. Obwohl in Fig. 2 nur 3 Elektroden beispielhaft eingezeichnet sind, dient jedes Nutenpaar 24, 24' zur Führung einer Elektrode, wobei sich Kathode 4 und Anode 3 abwechseln und jeweils zwischen sich einen Spalt 25 bestimmen, der die Breite des zugehörigen Stegs 22 bzw. 22' aufweist und bevorzugt etwa 1,3 mm beträgt, wobei die jeweilige Dicke von Anode und Kathode bei etwa 1 mm liegt. Bei dieser Elektrodenanordnung ist die Anzahl der Kathoden um eins größer als die der Anoden, so daß an jeder Seitenwand 23, 23' eine Kathode anliegt, ohne daß dabei zwischen dieser äußersten Kathode und der zugehörigen Seitenwand 23, 23' ein Spalt gebildet ist.

Der Raum 26 zwischen der Außenseite des Rahmens 20 und der Innenseite des rohrförmigen Gehäuses 10 ist gegenüber dem Innenraum des Rahmens abgedichtet und beispielsweise gefüllt oder ausgeschäumt. Die Abdichtung gegenüber dem Innenraum des Rahmens 20 kann beispielsweise durch im Bereich des Einlaßflansches 11 auf den Stirnseiten der Rahmenwände befestigte kreissegmentförmige Abdeckungen erfolgen, die als Durchtrittsquerschnitt für das den Reaktor durchfließende Wasser nur die vorzugsweise quadratische Innenfläche des Rahmens 20 freilassen.

Jeder Gehäuseabschnitt 10', 10", 10''', 10"" weist ein wie vorgehend beschrieben ausgestaltetes und in einem Rahmen 20 angeordnetes Elektrodenmodul (2', 2', 2", 2") auf.

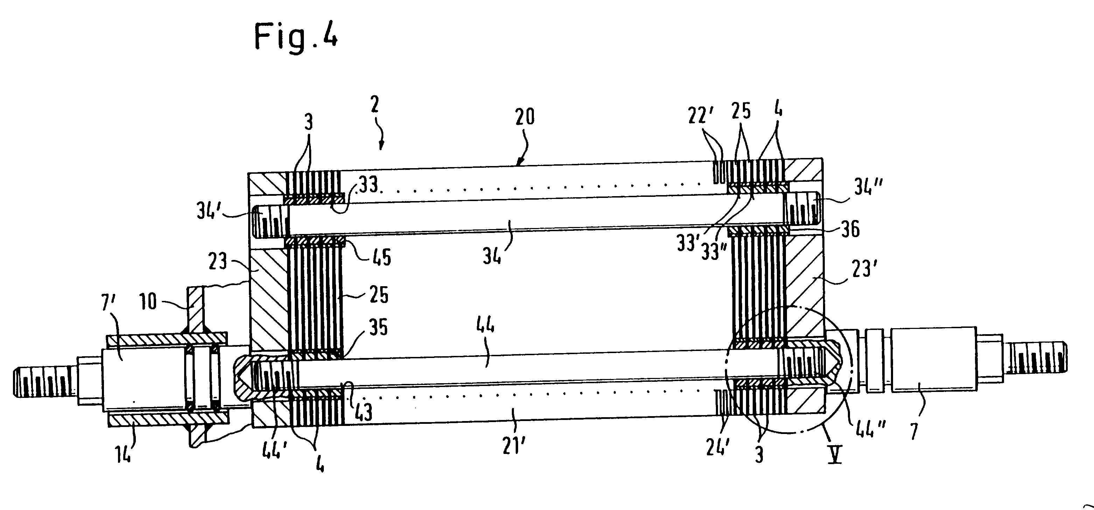

Einen Schnitt entlang der Linie IV - IV in Fig. 2 zeigt Fig. 4. Dabei sind das Gehäuse 10 sowie eine Kontaktdurchführung 14 nur ausschnittweise dargestellt. Fig. 4 zeigt die abwechselnde Anordnung von Anoden 3 und Kathoden 4 mit den dazwischenliegenden Spalten 25. Jede Anode 3 und jede Kathode 4 weist zwei voneinander beabstandete Öffnungen unterschiedlichen Durchmessers auf. Die kleinere öffnung 33 bzw. 43 ist dabei zum lockeren Durchtritt eines Zugankers 34 für die Anode bzw. eines Zugankers 44 für die Kathode ausgebildet. Die größere Öffnung 45 der Kathode 4 läßt den Durchtritt des Zugankers 34 der Anode zu, wobei zwischen dem Zuganker 34 und dem Öffnungsrand der Öffnung 45 ein radialer Abstand vorgesehen ist. Ebenso läßt die größere Öffnung 35 der Anode 3 den Durchtritt des Zugankers 44 der Kathode 4 unter Einhaltung eines radialen Abstands zu. Der jeweilige Zuganker 34 bzw. 44 kann dabei aus elektrisch leitendem oder nicht leitendem Material bestehen.

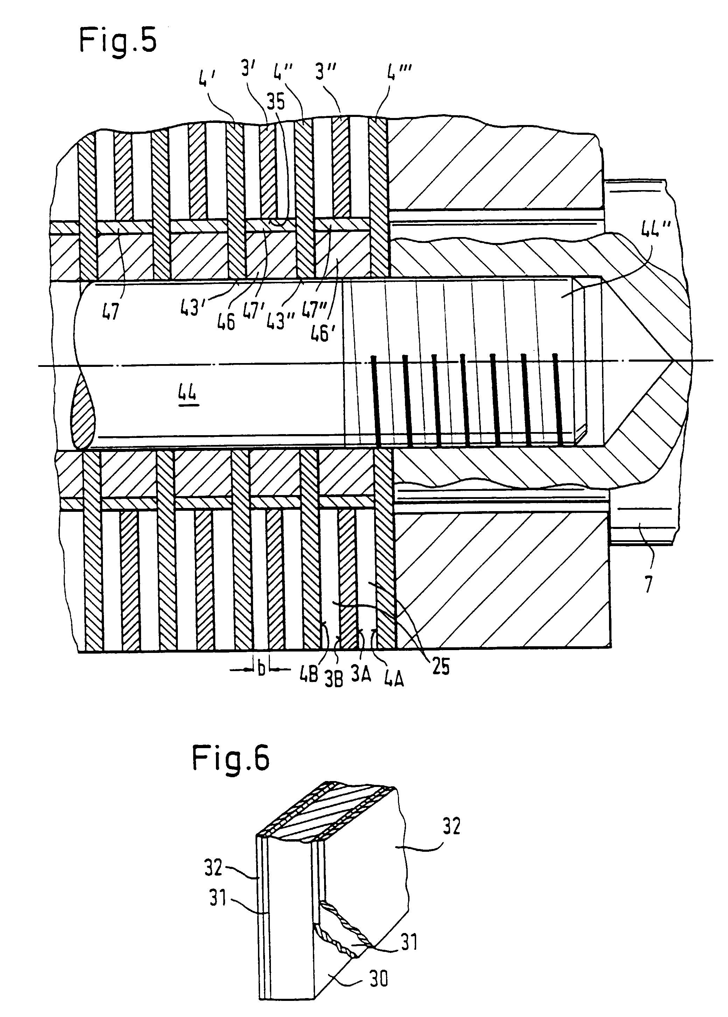

Die Kontaktierung der Elektroden untereinander sei am Beispiel der Kathoden 4 anhand der Fig. 5 näher erläutert. Fig. 5 zeigt den mit V in Fig. 4 bezeichneten Ausschnitt.

Der Zuganker 44 durchdringt die kleineren Öffnungen 43', 43'' der aufeinander folgenden Kathoden 4', 4'', wobei zwischen der jeweiligen Öffnung 43', 43'' und dem Außenumfang des Zugankers 44 soviel Abstand bleibt, daß eine Axialbewegung des Zugankers 44 möglich ist. Zwischen den aufeinander folgenden Kathoden 4', 4'' ist ein aus einem Ventilmetall, vorzugsweise Titan bestehender leitender Abstandsring 46 vorgesehen, der mit seinen Stirnflächen gegen die einander zugewandten Flächen der aufeinander folgenden Kathoden 4', 4'' anliegt. Der Innendurchmesser des Abstandsrings 46 entspricht dabei im wesentlichen den Bohrungen 43', 43'', so daß auch der Abstandsring 46 eine Axialbewegung des Zugankers 44 nicht behindert. Radial außerhalb des leitenden Abstandsrings 46 ist ein isolierender Zwischenring 47 angeordnet, der mit seinem Innenumfang den Außenumfang des Abstandsrings 46 umgibt und der in Axialrichtung etwas kürzer ist als ein leitender Abstandsring oder elastisch ist und mit seinen Stirnseiten an den einander zugewandten Flächen der aufeinander folgenden Kathoden 4, 4' anliegt. Der Außenumfang des isolierenden Zwischenrings 47 liegt dabei am Innenumfang der größeren Öffnung 35 der zwischen den Kathoden 4', 4'' gelegenen Anode 3' an.

Der kathodenseitige Zuganker 44 ist an seinen Enden mit jeweils einem Gewindeabschnitt 44', 44'' versehen. Auch der anodenseitige Zuganker 34 besitzt an seinen Enden Gewindeabschnitte 34' und 34''.

Die Kontaktierung der in Fig. 5 dargestellten Kathoden untereinander erfolgt auf die nachfolgend beschriebene Weise. Auf jedes Gewindeende 44', 44'' des kathodenseitigen Zugankers 44 wird ein in Fig. 3 näher gezeigter Kontaktbolzen 7 mittels eines Innengewindes 70, das in einer an einem Ende des Kontaktbolzens 7 gelegenen axialen Bohrung 71 vorgesehen ist, geschraubt. An dem mit dem Innengewinde 70 versehenen Ende des Kontaktbolzens 7 weist dieser eine ringförmige Stirnfläche 72 auf, die in Kontakt mit der Außenfläche der äußersten Kathode 4''' gerät und diese gegen den auf der anderen Seite dieser Kathode gelegenen Abstandsring 46' drückt. Dieser drückt wiederum gegen die nachfolgende Kathode 4', welche ihrerseits wiederum gegen den nachfolgenden Abstandsring 46 drückt usw.. Der auf das am anderen Ende des Zugankers 44 liegende Gewinde 44' geschraubte Kontaktbolzen 7' drückt dabei auf dieselbe Weise gegen die ihm zunächst gelegene Kathode.

Werden nun die Kontaktbolzen 7, 7' gegeneinander verspannt, so entsteht an den jeweiligen Trennstellen zwischen der Zugankerstirnseite 72, der Kathode 4''', dem Abstandsring 46', der Kathode 4'', dem Abstandsring 46, der Kathode 4' usw. eine sehr hohe Flächenpressung, die den jeweiligen elektrischen Übergangswiderstand herabsetzt und so die Leitung hoher elektrischer Ströme zwischen den Kontaktbolzen und zwischen den Kathoden bei Minimierung von Widerstandsverlusten zuläßt. Auf diese Weise wird an den Berührungsflächen eine Widerstandspolarisation vermieden und damit einhergehende Korrosion verhindert.

Auf analoge Weise werden die Anoden untereinander und mit den ihnen zugeordneten - nicht gezeigten - Kontaktbolzen elektrisch kontaktiert. Da jedoch den Seitenwänden 23, 23' des Rahmens 20 benachbart zuerst immer eine Kathode gelegen ist, drückt im Bereich der Anodenkontaktierung (in Fig. 4 oben) ein Kontaktbolzen mit seiner ringförmigen Stirnfläche 72 zunächst gegen die ringförmige Stirnfläche eines leitenden Abstandsrings 36. Dieser drückt dann wiederum auf die ihm benachbarte Anode 3'' usw.. Die Kontaktierung des in Fig. 4 gezeigten Elektrodenmoduls 2 mit der externen Stromversorgung bzw. mit dem nächstfolgenden Modul erfolgt über die kathodenseitigen Kontaktbolzen 7, 7' sowie die in Fig. 4 nicht gezeigten anodenseitigen Kontaktbolzen.

Die Kontaktbolzen 7, 7' sind abdichtend durch die zugehörige Kontaktdurchführung 14 bzw. 14' für die Kathode aus dem Gehäuse 10 herausgeführt. Auf analoge Weise sind die nicht gezeigten anodenseitigen Kontaktbolzen durch die Kontaktdurchführungen 13, 13' aus dem Gehäuse 10 herausgeführt.

Zur Abdichtung weist ein Kontaktbolzen 7 zwei axial voneinander beabstandete Umfangsnuten 73, 74 auf, in die jeweils ein Dichtungsring 75, 76 eingesetzt ist, der jeweils mit der Nut 73 bzw. 74 und dem Innenumfang der Kontaktdurchführung 14, 14'; 13, 13' abdichtend zusammenwirkt.

An seinem von der axialen Bohrung 71 abgewandten Ende ist der Kontaktbolzen 7 unter Ausbildung einer Kontaktfläche 77 mit einem Axialzapfen 78 versehen, welcher zur Aufnahme eines bekannten Kabelschuhs ausgebildet ist. An den Axialzapfen 78 schließt sich ein axial gerichteter Gewindebolzen 79 an, der zum Aufschrauben einer geeigneten Mutter ausgebildet ist, die den nicht gezeigten Kabelschuh eines Anschlußkabels gegen die Kontaktfläche 77 preßt.

Den Aufbau einer Anode zeigt Fig. 6. Auf einen vorzugsweise aus einem Ventilmetall wie Titan bestehenden Anodenkern 30 ist eine erste Schicht 31 eines geeigneten leitenden Materials aufgebracht, auf die wiederum eine zweite Schicht 32 eines anderen geeigneten leitenden Materials aufgebracht ist. Es kann auf die zweite Schicht wiederum eine erste Schicht und auf diese wiederum eine zweite Schicht usw. folgen. Eine der beiden Schichten 31, 32 besteht aus einem Titanmischoxid und die andere der beiden Schichten besteht aus einer Platin-Iridium-Legierung. Es spielt dabei keine wesentliche Rolle, welche der beiden Schichten zuerst auf den Anodenkern 30 aufgetragen ist; wesentlich ist aber, daß die Schichten 31, 32 einander abwechseln. Im Bereich der Anodenkontaktierung, d. h. in der die kleinere Öffnung 33 umgebenden Ringfläche, welche mit den anliegenden Abstandsringen 36 in Kontakt ist, kann zur Verbesserung der elektrischen Leitfähigkeit zwischen den Anoden und den angrenzenden Abstandsringen auf eine Beschichtung verzichtet werden, so daß die Abstandsringe direkt am aus dem Ventilmetall bestehenden Kern 30 der Anode anliegen. Die Kathode besteht bevorzugt aus einem (nicht rostenden) Edelstahl, wie beispielsweise V2A-Stahl.

Entgegen der üblichen Zielvorstellung in der Elektrosynthese, durch hohe Oberflächenrauhigkeit die Anodenüberspannung einer bestimmten Umsetzung herabzusetzen, wird beim Gegenstand der Erfindung angestrebt, durch eine besonders glatte Oberfläche und durch die vorbeschriebene Auswahl der aufeinander folgenden Anoden-Schichten die Überspannung der Sauerstoffabscheidung gegenüber der Überspannung der Chlorabscheidung möglichst hochzusetzen.

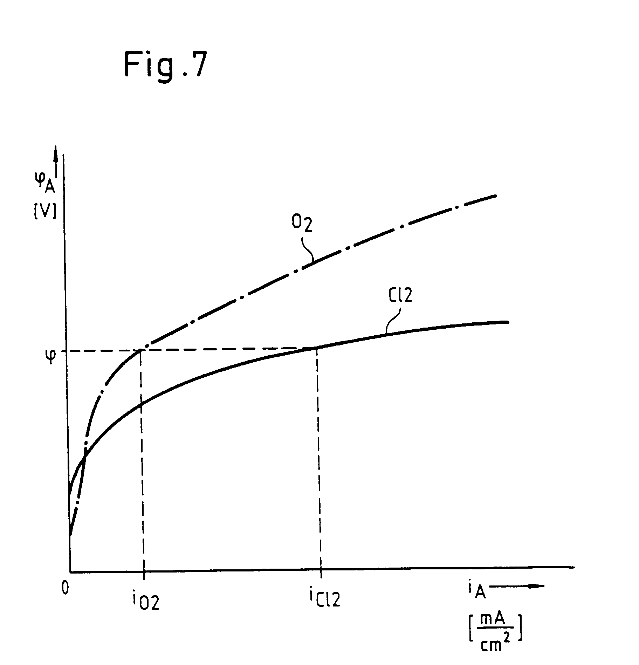

Fig. 7 zeigt das Potentialverhalten der ausgewählten Anode mit dem vorstehend beschriebenen Aufbau (gestrichelt gezeichnet). Auf der Ordinate ist dabei das Anodenpotential in Volt und auf der Abszisse ist die Stromdichte in mA/cm² angegeben. Die durchgezogene Kurve gibt die Chlorentwicklung an und die strichpunktierte Linie steht für die Sauerstoffentwicklung. Im gesamten Bereich oberhalb des Schnittpunktes der beiden Kurven ist die Sauerstoffteilstrondichte i₀₂ geringer als die Chlorteilstrondichte i_{Cl2}. Dadurch wird erreicht, daß einerseits die Sauerstoffentwicklung auch bei hohen Stromdichten bis auf ein erwünschtes Mindestmaß reduziert wird und andererseits aufgrund des hohen Potentials überwiegend neben OH-Radikal auch Sauerstoffverbindungen mit hohem Oxidationspotential (Peroxo-Verbindungen sowie Singulett-Sauerstoff) entstehen.

Durch den vorbeschriebenen Aufbau der Anode wird auch bei niedrigen Chloridkonzentrationen (unter 10 mg/l), wie sie im Süßwasser auftreten können, gewährleistet, daß bei noch verhältnismäßig geringen elektrischen Strömen eine für eine zuverlässige Entkeimung des Wassers ausreichende Menge an Oxidantien erzeugt wird, die als Chloräquivalente bestimmt werden können.

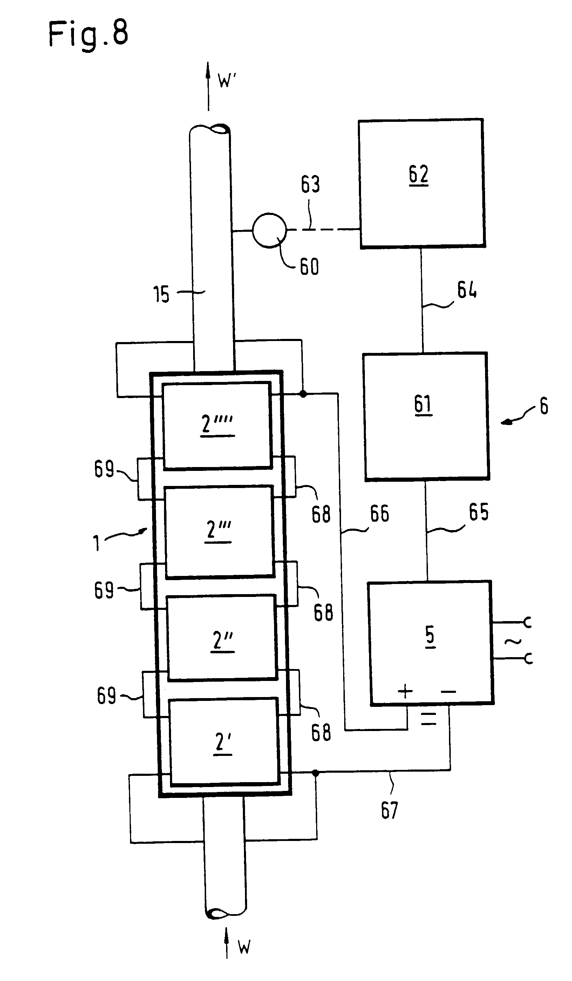

Fig. 8 zeigt den Aufbau einer geregelten Vorrichtung zur Entkeimung von Wasser mit einem Reaktor 1, welcher in Fig. 8 von unten nach oben in Richtung der Pfeile W, W' vom Wasser durchströmt wird. Der Reaktor besteht entsprechend der Darstellung in Fig. 1 aus vier in Durchflußrichtung hintereinander angeordneten Elektrodenmodulen 2', 2", 2''', 2''''. Dabei ist die Kathodenseite des ersten Elektrodenmoduls 2' mit dem negativen Ausgangspol einer Stromversorgungseinrichtung 5 über eine Minus-Versorgungsleitgung 67 verbunden. Zur gleichmäßigen Stromeinleitung in das Elektrodenmodul 2' ist die Minus-Versorgungsleitung 67 aufgezweigt, wobei jeder Zweig an einen der in Fig. 4 gezeigten Kontaktbolzen 7, 7' angeschlossen ist. Die beiden anodenseitigen Kontaktbolzen des Elektrodenmoduls 2' sind über Brückenleitungen 68, 69 mit den kathodenseitigen Kontaktbolzen des folgenden Elektrodenmoduls 2'' verbunden. Auf die gleiche Weise sind die Elektrodenmodule 2'' und 2''' sowie 2''' und 2'''' miteinander elektrisch verbunden. An die anodenseitigen Kontaktbolzen des letzten Elektrodenmoduls 2'''' sind die beiden Zweige einer ebenfalls aufgezweigten Plus-Versorgungsleitung 66 angeschlossen, welche die Anoden des letzten Elektrodenmoduls 2'''' mit dem positiven Anschlußpol der Stromversorgungseinrichtung 5 verbindet.

Im stromabwärts des Reaktors gelegenen Auslaßkanal 15 ist die Meßstelle einer Meßeinrichtung 60 angeordnet, mittels derer die im Wasser enthaltenen Oxidantien, die als Chloräquivalente bestimmt werden können, gemessen werden können. Die Meßeinrichtung 60 ist über eine Meßleitung 63 mit einer Rechnereinheit 62 verbunden, über die Meßdaten von der Meßeinrichtung 60 an die Rechnereinheit 62 geliefert werden.

Die Rechnereinheit 62 ermittelt aus den ihr zugeführten Meßdaten die Konzentration der im Wasser des Auslaßkanals enthaltenen Oxidantien, die als Chloräquivalente bestimmt werden können. Aus dieser Konzentration ermittelt die Rechnereinheit unter Verwendung von ihr von der Stromversorgungseinrichtung 5 zugeführten Daten, die den durch den Reaktor fließenden elektrischen Strom repräsentieren, und unter Kenntnis der gesamten aktiven Elektrodenfläche im Reaktor die Chloridteilstromdichte. Ein dieser Chloridteilstromdichte proportionaler Wert wird über eine Datenleitung 64 an eine Regeleinheit 61 weitergegeben. In der Regeleinheit 61 wird dieser ermittelte Wert für die Chloridteilstromdichte mit dem entsprechenden Wert einer Chloridteilstromdichte einer vorgegebenen Konzentration an freien Oxidantien, die als Chloräquivalente bestimmt werden können, verglichen. Der aus diesem Vergleich resultierende Differenzwert wird von der Regeleinheit in ein Steuersignal umgewandelt, welches über eine Steuerleitung 65 der Stromversorgungseinrichtung 5 zugeführt wird.

Die Stromversorgungseinrichtung 5 bezieht ihre elektrische Energie von einer durch eine Wellenlinie angedeuteten Wechselstromquelle. Sie wandelt diesen Wechselstrom in Gleichstrom um, wobei die an den mit + und - bezeichneten Gleichstromanschlüssen der Stromversorgungseinrichtung 5 für die Versorgungsleitungen 66 und 67 des Reaktors 1 liegende Gleichspannung entsprechend dem von der Regeleinheit 61 vorgegebenen elektrischen Stromfluß eingestellt wird. Eine bevorzugte Gleichspannung liegt im Bereich von 6 bis 7 Volt pro Elektrodenmodul, so daß aufgrund der Serienschaltung der elektrodenmodule im Beispiel der Fig. 8 etwa 24 bis 28 Volt an den Ausgängen der Stromversorgungseinrichtung 5 anliegen.

Die vorbeschriebene Regelung gestattet es, die gesamte Vorrichtung entsprechend der mikrobiellen Belastung des Wassers auf eine vorgegebene Konzentration an freien Oxidantien, die als Chloräquivalente bestimmt werden können, einzustellen. Diese Einstellung muß bei der Einrichtung der Vorrichtung durchgeführt werden und kann zur Kontrolle in größeren Zeitabständen wiederholt werden. Zwischenzeitlich auftretende Änderungen der für den elektrochemischen Prozeß maßgeblichen Randbedingungen, wie beispielsweise Änderungen der Leitfähigkeit des Wassers oder Änderungen der Wirksamkeit der einzelnen Elektrodenmodule werden aufgrund der dadurch auftretenden veränderten Konzentration von als Chloräquivalente bestimmbaren Oxidantien im Auslaßkanal von der Meß- und Regelungseinrichtung 6 erfaßt. Daraufhin wird von der Meß- und Regelungseinrichtung 6 der durch den Reaktor fließende elektrische Strom im Sinne einer Korrektur der Chloridteilstromdichte geregelt.

Es hat sich als vorteilhaft insbesondere bezüglich der Lebensdauer der Anoden erwiesen, wenn die Anode aus einem Ventilmetallkern mit einer homogenen elektrokatalytisch aktiven Beschichtung besteht, die sich überwiegend aus einer Verbindung von Titan und zumindest einem Platinmetall in oxidischer und/oder nicht oxidischer Form zusammensetzt.

## Patentansprüche

1. Vorrichtung zur Entkeimung von Wasser mittels anodischer Oxidation mit
- einem zumindest je eine Anode und eine Kathode aufweisenden, von Wasser durchströmbaren Reaktor sowie
- einer mit der Anode und der Kathode verbundenen elektrischen Stromversorgungseinrichtung,
- wobei zwischen einander zugewandten Flächen von Anode und Kathode ein Spalt mit gleichbleibender Spaltbreite vorgesehen ist,
- wobei die Anode (3) aus einem Ventilmetallkern (30) mit einer homogenen elektrokatalytisch aktiven Beschichtung (31, 32) besteht, die sich überwiegend aus einer Verbindung von Titan und zumindest einem Platinmetall in oxidischer und/oder nicht oxidischer Form zusammensetzt,
dadurch **gekennzeichnet** ,
- daß mehrere Anoden (3, 3', 3''...) und mehrere Kathoden (4, 4', 4''...) in einem Elektrodenmodul (2) für einen Reaktor (1) angeordnet sind und daß ein Reaktor eine Mehrzahl von Elektrodenmodulen (2', 2'', 2''', 2'''') aufweist,
- daß die Elektrodenmodule (2', 2'', 2''', 2'''') untereinander als elektrische Serienschaltung verbunden sind und
- daß sowohl die Anoden (3, 3', 3''...) als auch die Kathoden (4, 4', 4''...) eines jeden Elektrodenmoduls (2', 2'', 2''', 2'''') jeweils untereinander elektrisch leitend in Parallelschaltung miteinander verbunden sind.

2. Vorrichtung nach Anspruch 1,
dadurch **gekennzeichnet**,
daß die Beschichtung des Ventilmetallkerns (30) der Anode (3) zumindest zwei aufeinanderfolgenden Schichten (31, 32) aufweist, von denen die eine aus Titanmischoxid und die andere aus einer Platin-Iridium-Legierung besteht.

3. Vorrichtung nach Anspruch 2,
dadurch **gekennzeichnet**,
daß eine Mehrzahl von Schichten-Paaren (31, 32) vorgesehen ist, wobei die Schicht aus Titanmischoxid und die Schicht aus einer Platin-Iridium-Legierung abwechselnd aufgetragen sind.

4. Vorrichtung nach einem der Ansprüche 1 bis 3,
dadurch **gekennzeichnet**,
daß der Kern (30) der Anode (3) aus Titan besteht.

5. Vorrichtung nach einem der Ansprüche 1 bis 4,
dadurch **gekennzeichnet**,
daß die Rauhtiefe der Anodenoberfläche geringer ist als 1,0 µm.

6. Vorrichtung nach einem der Ansprüche 1 bis 5,
dadurch **gekennzeichnet**,
daß Anode (3) und Kathode (4) parallel zueinander angeordnet sind.

7. Vorrichtung nach Anspruch 6,
dadurch **gekennzeichnet**,
daß Anode (3) und Kathode (4) planparallele Platten sind.

8. Vorrichtung nach einem der Ansprüche 1 bis 5,
dadurch **gekennzeichnet**,
daß Anode (3) und Kathode (4) als zueinander konzentrisch angeordnete Rohre ausgebildet sind.

9. Vorrichtung nach einem der Ansprüche 1 bis 8,
dadurch **gekennzeichnet**,
daß jeweils aufeinanderfolgende Anoden (3', 3'') einerseits und jeweils aufeinanderfolgende Kathoden (4', 4'', 4''') andererseits zwischeneinander jeweils leitende Abstandselemente (46, 46') aufweisen und
daß zum Zwecke der elektrischen Kontaktierung die Anoden (3', 3'') mit den ihnen zugeordneten leitenden Abstandselementen sowie die Kathoden (4', 4'', 4''') mit den diesen zugeordneten Abstandselementen (46, 46') unter hohem Druck und zur Erzeugung einer hohen Flächenpressung an den Berührungsflächen zwischen Anoden bzw. Kathoden und den jeweils zugeordneten Abstandselementen aneinandergepreßt werden.

10. Vorrichtung nach Anspruch 9,
dadurch **gekennzeichnet**,
daß die Anoden (3', 3'') einerseits und die Kathoden (4', 4'', 4''') andererseits jeweils koaxiale Anschlußbohrungen (43', 43''; 33', 33'') aufweisen,
daß durch die koaxialen Anschlußbohrungen (43', 43'') der Kathoden ein kathodenseitiger Zuganker (44) geführt ist, welcher an seinen Enden mit Gewindeabschnitten (44', 44'') versehen ist,
daß die kathodenseitigen leitenden Abstandselemente aus Abstandsringen (46, 46') bestehen,
daß auf die mit Gewinde vesehenen Enden (44', 44'') des kathodenseitigen Zugankers (44) Kontaktbolzen (7, 7') aufgeschraubt sind, die mit einander zugewandten Stirnflächen (72) den Verbund aus Kathoden und Abstandsringen unter Aufbringung einer Zugspannung auf den Zuganker (44) zusammenpressen, und
daß auf gleiche Weise mittels eines anodenseitigen Zugankers (34) und zugeordneten Kontaktbolzen die Kontaktierung der Anoden (3', 3'') erfolgt.

11. Vorrichtung nach Anspruch 10,
dadurch **gekennzeichnet**,
daß die Anoden (3', 3'') im Bereich des kathodenseitigen Zugankers (44) jeweils eine mit den kathodenseitigen Bohrungen (43', 43'') koaxiale Bohrung größeren Durchmessers aufweisen, innerhalb derer jeweils der kathodenseitige leitende Abstandsring (46, 46') angeordnet ist,
daß zwischen dem Umfang des kathodenseitigen leitenden Abstandsrings (46, 46') und der ihn umgebenden Anode (3', 3'') ein isolierender Zwischenring (47', 47'') angeordnet ist und
daß die Kathoden im Bereich des anodenseitigen Zugankers (34) in gleicher Weise ausgestaltet und gegen die anodenseitigen leitenden Abstandsringe (36) isoliert sind.

12. Vorrichtung nach einem der Ansprüche 1 bis 11,
dadurch **gekennzeichnet**,
daß in Strömungsrichtung hinter dem Reaktor (1) eine Meßeinrichtung (60) zur Bestimmung von im Wasser befindlichen Oxidantien, die als Chloräquivalente bestimmt werden können, vorgesehen ist und daß eine ein aus der Meßeinrichtung erhaltenes Meßsignal weiterverarbeitende Regeleinheit (61) zur Regelung der Stromversorgungseinrichtung (5) vorgesehen ist.

13. Verfahren zur Entkeimung von Wasser mittels anodischer Oxidation unter Verwendung einer Vorrichtung der Ansprüche 1 bis 12,
dadurch **gekennzeichnet**,
- daß Wasser einem Reaktor mit einer Mehrzahl von Elektrodenmodulen mit jeweils zumindest einer Anode und einer Kathode zugeführt wird,
- daß das Wasser nacheinander durch die jeweiligen Elektrodenmodule zwischen deren Anoden und deren Kathoden hindurchgeleitet wird und
- daß das Wasser aus dem Reaktor abgeführt wird, wobei zwischen der jeweiligen Anode und der jeweiligen Kathode eine elektrische Spannung anliegt, wodurch Sauerstoffverbindungen sowie Chlorverbindungen entstehen, die als Oxidantien wirken.

14. Verfahren nach Anspruch 13,
dadurch **gekennzeichnet**,
daß das Wasser zwischen der jeweiligen Anode und der jeweiligen Kathode laminar strömt.

15. Verfahren nach Anspruch 13 oder 14,
dadurch **gekennzeichnet**,
- daß in Strömungsrichtung hinter dem Reaktor (1) die Konzentration der freien Oxidantien gemessen wird,
- daß die Konzentration der freien Oxidantien als Konzentration von Chloräquivalenten bestimmt wird,
- daß diese bestimmte Konzentration mit einem Sollwert (der Konzentration, die zur Abtötung der Keime notwendig ist) verglichen wird und
- daß dementsprechend die elektrische Gesamtstromdichte verändert wird.

## Claims

1. Apparatus for sterilizing water by anodic oxidation, comprising:
- a reactor which has at least one anode and one cathode and through which water can flow and
- an electric current supply means connected to the anode and cathode,
- wherein a gap of constant width is provided between surfaces of the anode and cathode facing towards each other, and
- wherein the anode (3) comprises a valve metal core (30) with a homogeneous, electro-catalytically active coating (31,32), made up preponderantly of a compound of titanium and at least one platinum metal in oxidic and/or non-oxidic form,
characterised in that
- a plurality of anodes (3, 3', 3'' ...) and a plurality of cathodes (4, 4', 4'' ...) are arranged in an electrode module (2) for a reactor (1), and that a reactor has a plurality of electrode modules (2', 2'', 2''', 2''''),
- that the electrode modules (2', 2'', 2''', 2''') are interconnected in an electrical series arrangement and
- that both the anodes (3, 3', 3'' . . .) and the cathodes (4, 4', 4'' ...) of each electrode module (2', 2'' , 2''', 2'''') are conductively interconnected among themselves in a parallel arrangement.

2. Apparatus according to claim 1,
characterised in that
the coating of the valve metal core (30) of the anode (3) has at least two successive layers (31, 32), one of which comprises titanium mixed oxide and the other a platinumiridium alloy.

3. Apparatus according to claim 2,
characterised in that
a plurality of pairs of layers (31, 32) is provided, the layer of titanium mixed oxide and the layer of platinumiridium alloy being applied alternately.

4. Apparatus according to any of claims 1 to 3,
characterised in that
the core (30) of the anode (3) comprises titanium.

5. Apparatus according to any of claims 1 to 4,
characterised in that
the depth of the anode surface roughness is less than 1.0 µm.

6. Apparatus according to any of claims 1 to 5,
characterised in that
the anode (3) and cathode (4) are arranged in parallel.

7. Apparatus according to claim 6,
characterised in that
the anode (3) and cathode (4) are plates with parallel faces.

8. Apparatus according to any of claims 1 to 5,
characterised in that
the anode (3) and cathode (4) are in the form of concentrically arranged tubes.

9. Apparatus according to any of claims 1 to 8,
characterised in that
successive anodes (3', 3'') on the one hand and successive cathodes (4', 4'', 4''') on the other each have conductively interconnected spacer members (46, 46'), and that for the purpose of electrical contacting, the anodes (3', 3'') with their associated conductive spacer members and the cathodes (4', 4'', 4''') with their associated spacer members (46, 46') are pressed against each other at high pressure and to produce high surface pressure at the contact surfaces between the anodes and cathodes and the respective associated spacer members.

10. Apparatus according to claim 9,
characterised in that
the anodes (3', 3'') on the one hand and the cathodes (4', 4'', 4''') on the other each have coaxial connecting holes (43', 43''; 33', 33'),
that a cathode tensioning stay (44) is passed through the coaxial connecting holes (43', 43'') of the cathodes and is provided with threaded sections (44', 44'') at its ends,
that the conductive cathode spacer members comprise spacer rings (46, 46'),
that contact pins (7, 7') are screwed onto the threaded ends (44', 44'') of the cathode stay (44), end surfaces (72) of the pins which face towards each other pressing together the combined cathodes and spacer rings while applying tensile stress to the stay (44), and
that the anodes (3', 3'') are contacted in the same way by means of an anode stay (34) and associated contact pins.

11. Apparatus according to claim 10,
characterised in that
the anodes (3', 3'') each have a hole of larger diameter coaxial with the cathode holes (43', 43'') and located in the region of the cathode tensioning stay (44), inside which hole the conductive cathode spacer ring (46, 46') is arranged in each case,
that an insulating intermediate ring (47', 47'') is arranged between the periphery of the conductive cathode spacer ring (46, 46') and the anode (3', 3'') surrounding it, and
that the cathodes in the region of the anode stay (34) have the same structure and are insulated from the conductive anode spacer rings (36).

12. Apparatus according to any of claims 1 to 11,
characterised in that
a measuring means (60) is provided downstream of the reactor (1) to determine oxidants in the water which can be determined as chlorine equivalents, and
that a control unit (61), which further processes a measurement signal received from the measuring means, is provided to control the current supply means (5).

13. A method of sterilizing water by anodic oxidation, using an apparatus according to claims 1 to 12,
characterised in that
- water is supplied to a reactor comprising a plurality of electrode modules, each with at least one anode and one cathode,
- that the water is successively passed through the respective electrode modules, between the anodes and the cathodes thereof, and
- that the water is discharged from the reactor, an electrical voltage being applied between the respective anode and the respective cathode, thereby forming oxygen compounds and chlorine compounds which act as oxidants.

14. A method according to claim 13,
characterised in that
the water passes in a laminar flow between the respective anode and the respective cathode.

15. A method according to claim 13 or 14,
characterised in that
- the concentration of free oxidants is measured downstream of the reactor (1),
- that the concentration of free oxidants is determined as the concentration of chlorine equivalents,
- that the concentration determined is compared to a desired value (the concentration necessary to kill the germs) and
- that the electrical total current density is varied accordingly.

## Revendications

1. Dispositif pour la stérilisation d'eau au moyen de l'oxydation anodique, comportant :
- un réacteur susceptible d'être traversé par de l'eau et présentant respectivement au moins une anode et une cathode, et
- un dispositif d'alimentation électrique relié à l'anode et à la cathode,
- dans lequel est prévue une fente d'une largeur constante entre des surfaces orientées l'une vers l'autre de l'anode et de la cathode,
- dans lequel l'anode (3) est constituée par un noyau en métal à effet soupape (30) présentant un revêtement homogène actif sur le plan électro-catalytique (31, 32) qui est composé pour la majeure partie par un composé de titane et d'au moins un platine métallique sous forme oxydée et/ou non oxydée,
caractérisé en ce que :
- plusieurs anodes (3, 3', 3'', ...) et plusieurs cathodes (4, 4', 4'', ...) sont agencées dans un module d'électrode (2) pour un réacteur (1), et en ce qu'un réacteur présente une pluralité de modules d'électrode (2', 2", 2''', 2''''),
- que les modules d'électrode (2', 2'', 2' ' ' , 2'''') sont reliés les uns aux autres sous forme d'un circuit électrique série, et
- que les anodes (3, 3', 3'', ...) et également les cathodes (4, 4', 4'', . . .) de chaque module d'électrode (2', 2'' , 2''', 2'''') sont respectivement reliées les unes aux autres sous forme d'un circuit électrique parallèle.

2. Dispositif selon la revendication 1, caractérisé en ce que le revêtement du noyau en métal à effet soupape (30) de l'anode (3) présente au moins deux couches successives (31, 32) dont l'une est constituée en oxyde mixte de titane et dont l'autre est constituée en un alliage de platine et d'iridium.

3. Dispositif selon la revendication 2, caractérisé en ce qu'il est prévu une pluralité de paires de couches (31, 32), la couche en oxyde mixte de titane et la couche en un alliage de platine et d'iridium étant déposées en alternance.

4. Dispositif selon l'une quelconque des revendications 1 à 3, caractérisé en ce que le noyau (30) de l'anode (3) est constitué en titane.

5. Dispositif selon l'une quelconque des revendications 1 à 4, caractérisé en ce que la profondeur de rugosité de la surface d'anode est inférieure à 1,0 µm.

6. Dispositif selon l'une quelconque des revendications 1 à 5, caractérisé en ce que l'anode (3) et la cathode (4) sont agencées parallèlement l'une à l'autre.

7. Dispositif selon la revendication 6, caractérisé en ce que l'anode (3) et la cathode (4) sont des plaques planes parallèles.

8. Dispositif selon l'une quelconque des revendications 1 à 5, caractérisé en ce que l'anode (3) et la cathode (4) sont réalisées sous forme de tubes agencés concentriquement l'un à l'autre.

9. Dispositif selon l'une quelconque des revendications 1 à 8, caractérisé en ce que les anodes respectives successives (3', 3'') d'une part, et les cathodes respectives successives (4', 4'', 4''') d'autre part présentent respectivement entre elles des éléments d'écartement conducteurs (46, 46'), et en ce que dans le but de réaliser le contact électrique, les anodes (3', 3'') avec les éléments d'écartement conducteurs associés à celles-ci, ainsi que les cathodes (4', 4'', 4''') avec les éléments d'écartement (46, 46') associés à celles-ci, sont pressées les unes contre les autres sous une pression élevée et pour établir une pression de surface élevée au niveau des surfaces de contact entre les anodes ou les cathodes et les éléments d'écartement respectivement associés.

10. Dispositif selon la revendication 9, caractérisé en ce que les anodes (3', 3'') d'une part et les cathodes (4', 4'', 4''') d'autre part présentent respectivement des perçages de raccordement coaxiaux (43', 43'' ; 33', 33'), en ce qu'à travers les perçages de raccordement coaxiaux (43', 43'') des cathodes est mené un tirant d'ancrage (44) du côté cathode, lequel est pourvu à ses extrémités de tronçons filetés (44', 44''), en ce que les éléments d'écartement conducteurs côté cathode sont constitués par des anneaux d'écartement (46, 46'), en ce qu'aux extrémités (44', 44') pourvues de filetages du tirant d'ancrage côté cathode (44) sont vissés des boulons de contact (7, 7') qui serrent le groupe formé par les cathodes et les anneaux d'écartement par des surfaces frontales (72) orientées l'une vers l'autre, en appliquant une tension de traction sur le tirant d'ancrage (44), et en ce que l'amenée en contact des anodes (3', 3'') s'effectue de la même manière au moyen d'un tirant d'ancrage (34) côté anode et de boulons de contact associés.

11. Dispositif selon la revendication 10, caractérisé en ce que les anodes (3', 3'') présentent dans la région du tirant d'ancrage (44) côté cathode respectivement un perçage de diamètre supérieur et coaxial avec les perçages (43', 43'') côté cathode, à l'intérieur duquel est agencé l'anneau d'écartement conducteur respectif (46, 46') côté cathode, en ce qu'il est prévu, entre la périphérie de l'anneau d'écartement conducteur (46, 46') côté cathode et l'anode (3', 3'') qui l'entoure, un anneau intermédiaire isolant (47', 47''), et en ce que les cathodes sont réalisées de la même manière dans la région du tirant d'ancrage (34) côté anode, et sont isolées par rapport aux anneaux d'écartement conducteurs (36) côté anode.

12. Dispositif selon l'une quelconque des revendications 1 à 11, caractérisé en ce qu'il est prévu, en direction d'écoulement derrière le réacteur (1), un dispositif de mesure (60) pour déterminer des oxydants situés dans l'eau, qui peuvent être déterminés comme équivalentschlore, et en ce qu'il est prévu une unité de régulation (61) qui traite un signal de mesure reçu du dispositif de mesure, pour réguler le dispositif d'alimentation électrique (5).

13. Procédé pour la stérilisation d'eau au moyen de l'oxydation anodique, en utilisant un dispositif selon l'une quelconque des revendications 1 à 12, caractérisé en ce que :
- de l'eau est amenée à un réacteur comportant une pluralité de modules d'électrode présentant respectivement au moins une anode et une cathode,
- l'eau est guidée successivement à travers les modules d'électrode respectifs entre leurs anodes et leurs cathodes, et
- l'eau est évacuée hors du réacteur, une tension électrique étant appliquée entre l'anode respective et la cathode respective, grâce à quoi s'établissent des composés oxygénés ainsi que des composés chlorés qui agissent comme oxydants.

14. Procédé selon la revendication 13, caractérisé en ce que l'eau s'écoule de manière laminaire entre l'anode respective et la cathode respective.

15. Procédé selon l'une ou l'autre des revendications 13 et 14, caractérisé en ce que :
- la concentration des oxydants libres est mesurée en direction d'écoulement derrière le réacteur (1),
- la concentration des oxydants libres est déterminée comme concentration en équivalents-chlore,
- cette concentration déterminée est comparée avec une valeur de consigne (la concentration qui est nécessaire pour la destruction de germes), et
- que la densité de courant électrique totale est modifiée en correspondance.
